# EUROPEAN PATENT SPECIFICATION

(11) **EP 2 037 046 B1**
(45) Date of publication and mention of the grant of the patent: **11.05.2011**
(21) Application number: 07425572.0
(22) Date of filing: 17.09.2007
(51) Int. Cl.: E02D 17/20, B32B 3/00, B29D 28/00

(54) **Draining and filtering net, particularly for geotechnical applications**
Ablauf- und Filternetz, insbesondere für geotechnische Anwendungen
Filet pour drainage et filtrage, particulièrement pour application géotechniques

(43) Date of publication of application: 18.03.2009
(73) Proprietor: Tenax S.p.A., 23897 Viganò (Lecco) (IT)
(72) Inventor: Beretta, Cesare, 23871 Lomagna (Prov. of Lecco) (IT)
(74) Representative: Alagem Modiano, Lara S.

(56) References cited:
- EP-A- 0 836 929
- WO-A-2007/095979
- US-A1- 2004 170 801
- US-A1- 2005 183 329
- US-B1- 6 972 269

## Description

The present invention relates to a draining and filtering net, particularly for geotechnical applications.

As is known, in the geotechnical field, draining and filtering nets are already used which are generally constituted by a mesh layer of different types, on one face of which there is a plurality of protrusions, to which a layer of nonwoven fabric is then connected.

In practice, this kind of net is designed to create a draining region for the passage of liquid and to provide filtration for the containment of particulate, sand or more or less fine debris, by means of the nonwoven fabric layer.

In practical execution, it has been observed that such nets are not always able to fully solve the problem, since they do not have the necessary mechanical strength and therefore flattenings can occur which in practice prevent correct draining.

EP-A-0 836 929 discloses a sheet-like structure comprising an extruded sheet-like element which has on at least one or both faces a plurality of discontinous penducles at the juncture points of the transverse and longitudinal filaments of the sheet-like element. An outer layer of non-woven fabric may be glued to the penducles.

WO 2007/095979 A discloses a sheet-like net element for geotechnical applications that comprises a sheet-like body formed of two sets of extruded filaments forming a lattice-like structure and made of a fisrt base polymer for strength and durability. A second rubber-filled polymer is coextruded over longitudinal filaments of the sheet-like body at one or both sides thereof, to provide a reduced surface hardness and a high friction coefficient for preventing movement of the net in use. An outer layer may be applied to one or both sides at the second rubber-filled polymer regions.

The aim of the invention is to solve the problem described above by providing a draining and filtering net particularly for geotechnical applications which allows to ensure, even in the most demanding applications, the containment of particulate, sand or more or less fine debris, allowing only liquid substances to pass.

Within this aim, an object of the invention is to provide a draining and filtering net which has particular mechanical strength characteristics and at the same time allows simplified manufacture.

Another object of the present invention is to provide a draining and filtering net, particularly for geotechnical applications, which thanks to its particular constructive characteristics is capable of giving the greatest assurances of reliability and safety in use.

Still another object of the present invention is to provide a draining and filtering net which can be obtained easily starting from commonly commercially available elements and materials and is also competitive from a merely economical standpoint.

In accordance with the invention, there is provided a draining and filtering net, particularly for geotechnical applications, as defined in the appended claims.

Further characteristics and advantages will become better apparent from the description of a preferred but not exclusive embodiment of a draining and filtering net, particularly for geotechnical applications, illustrated by way of non-limiting example in the accompanying drawings, wherein:

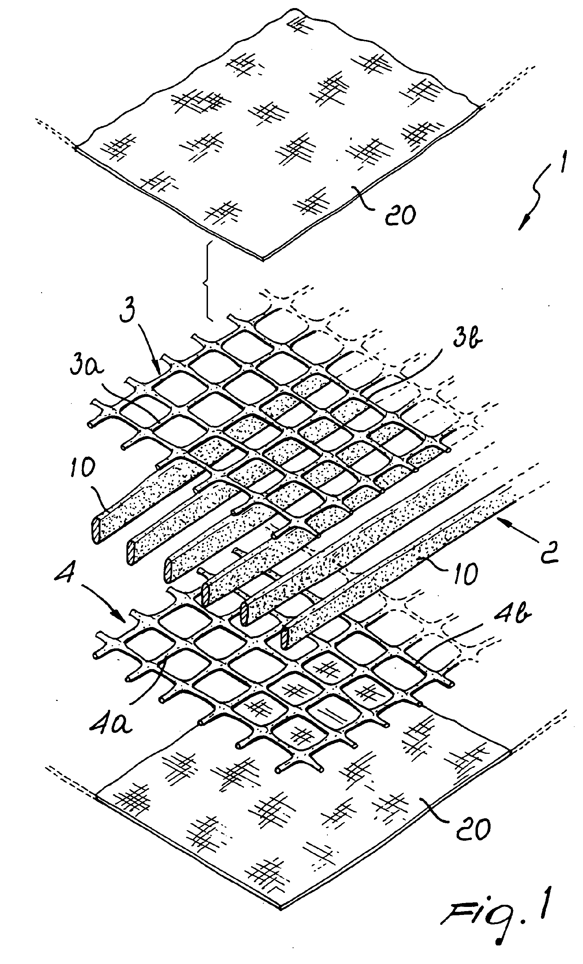

Figure 1 is a perspective view of a draining net which, though being obtained monolithically, is shown in an exploded view to allow easier description;

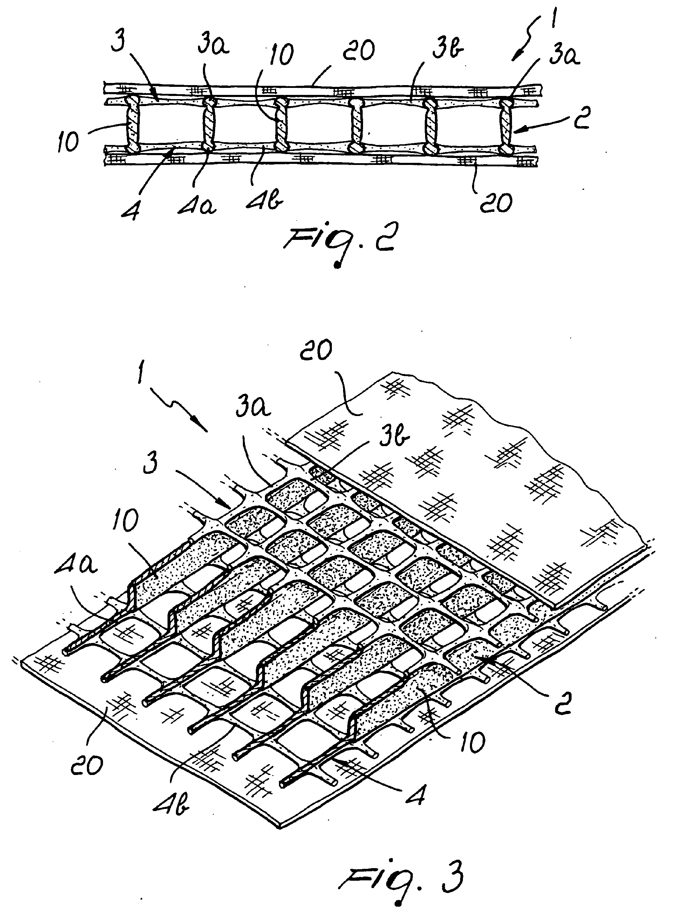

Figure 2 is a sectional view of the draining net;
Figure 3 is a layered perspective view of the draining net;
Figure 4 is a view of a different embodiment of the draining and filtering net;
Figure 5 is a perspective view of a draining net with a continuous outer layer, also shown in exploded view for the sake of convenience in description;
Figure 6 is a sectional view of the net of Figure 5;
Figure 7 is a layered view of the net of Figure 5.

With reference to the figures, the draining and filtering net, particularly for geotechnical applications, according to the invention, generally designated by the reference numeral 1, comprises an intermediate layer 2 and a first outer layer 3 and a second outer layer 4, which are applied at the opposite faces of the intermediate layer.

Preferably but not necessarily, the net is made of high-density polyethylene, since it has been found to be a polymer which is suitable for geotechnical applications, mixed with optional additives in order to provide the mechanical and color characteristics according to the final use and to relevant commercial requirements.

The intermediate layer 2, which is substantially the fundamental element in order to ensure good mechanical and hydraulic performance of the net, is constituted by a plurality of continuous filaments, designated by the reference numeral 10, which are arranged mutually side-by-side so as to create in practice a channel for the drained water.

The filaments 10, in a preferred but not exclusive embodiment, have a height, viewed at right angles to the plane of the net, ranging from 3 to 6 mm, and have a width, measured parallel to its plane of arrangement, ranging from 1 to 3 mm.

Tests have found that the spacing between the filaments 10 must range advantageously from 8 to 20 mm.

Outer layers 3 and 4 are provided on the opposite faces of the intermediate layer 2 and are constituted advantageously by a square-mesh net which has at least one filament 3a and 4a which is parallel to the filaments 10 and is advantageously arranged at the filaments 10.

The filaments 10 lie in the extrusion direction or main direction, while the transverse filaments of the outer layers 3 and 4, designated by the reference numerals 3b and 4b, are substantially perpendicular to the direction of arrangement of the layers 10.

An important element for completing the draining net is the presence of layers of nonwoven fabric, designated by the reference numeral 20, which are provided on the outer layers 3 and 4.

The nonwoven fabric can have different grammages, but preferably a weight of 180 g/m² is used, obtaining thicknesses and chemical properties which are suitable to obtain a good filter function and a barrier against the intrusion of debris and the like.

At this point it should be noted that the distance between the filaments 10 has been studied so as to prevent the nonwoven fabric from penetrating between the filaments 10, extending for example so as to touch the layer of nonwoven fabric of the opposite face, since accidental contact of the covering made of nonwoven fabric between the opposite outer layers would entail for example contamination of the material isolated by the geogrid with the percolation liquid, together with a considerable reduction of draining capacity.

In summary, the intermediate layer, which in practice provides the main thickness of the net according to invention, must be provided in such a way as to supply sufficient resistance to tension and compression caused by concentrated loads and/or intense surface pressures.

Moreover, it is extremely important that the draining and filtering net provided by the intermediate layer and by the outer layers is extruded in a single step and can be made of a single material or optionally with different materials as a function of the types of results to be obtained.

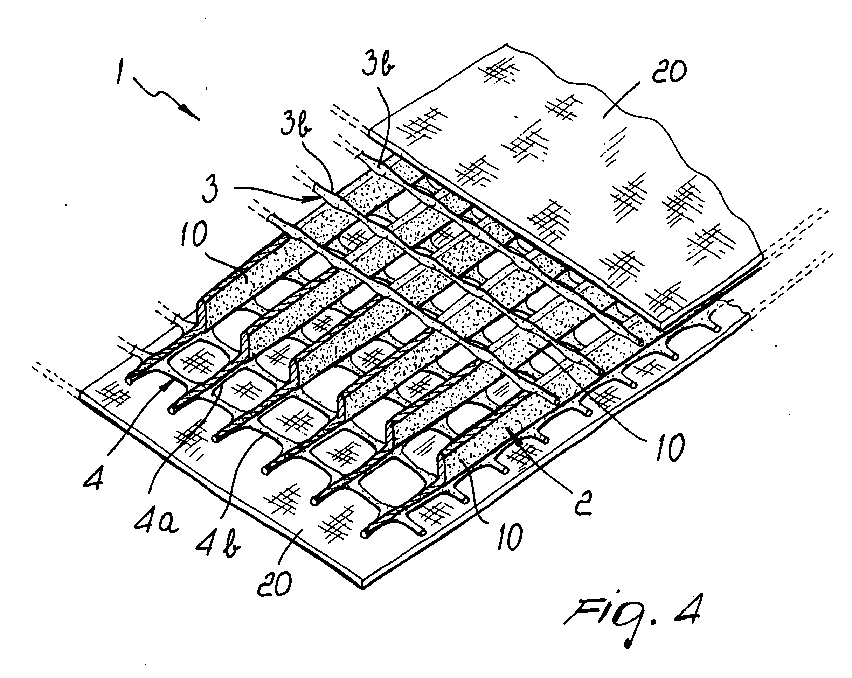

With reference to Figure 4, the fact is stressed that in at least one of the outer layers, specifically the layer 3, the filament 3a, which is parallel to the filaments 10, is practically degenerated and only the transverse filaments 3b are maintained, thus optimizing the functionality of the net.

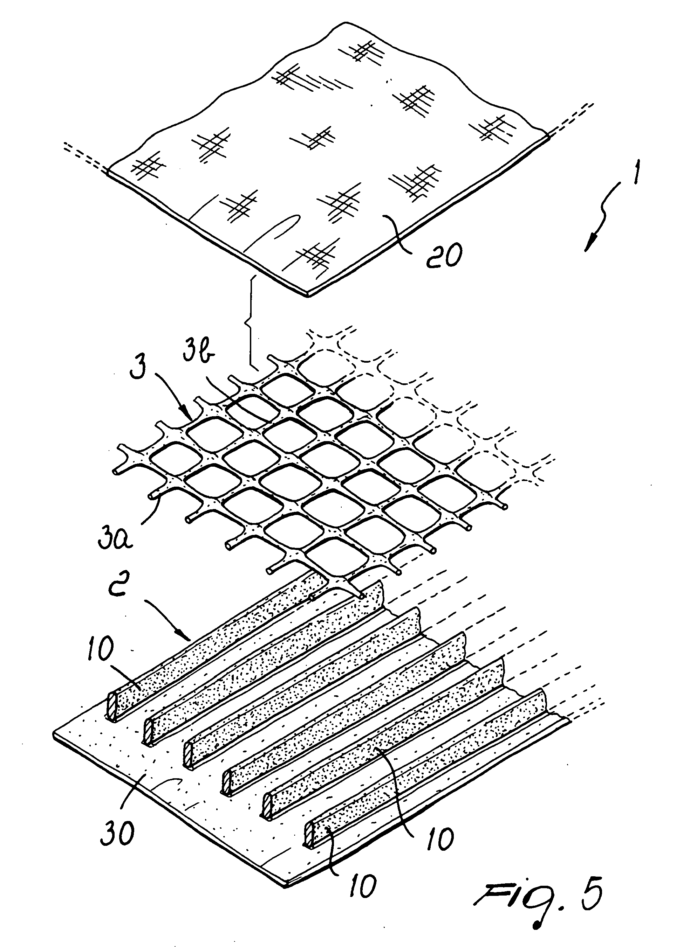

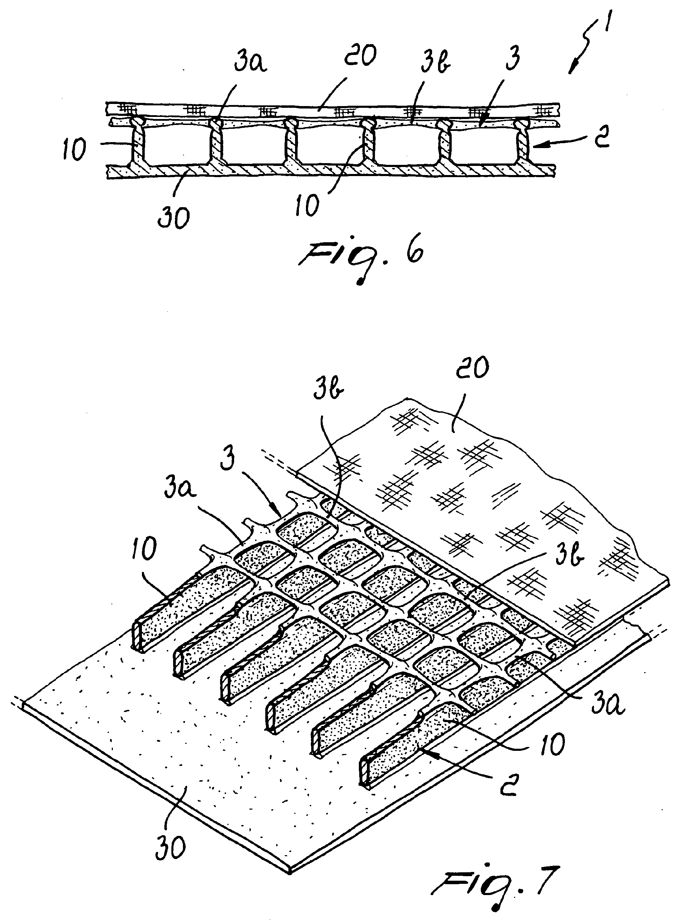

According to a further embodiment, shown in Figures 5 to 7, one of the layers is replaced by a continuous sheath 30, from which the filaments 10 protrude, thus obtaining a net in which it is possible to provide a separation for the draining region, while the usual layer of nonwoven fabric 20 is provided on the other layer.

In a preferred embodiment, the net has a total thickness of approximately 7 mm and has a hydraulic transmissivity, measured according to the ASTM D 4716-03 references, with a hydraulic gradient of 0.1 and an applied pressure of 1200 kPa for 100 hours, greater than 0.001 m²/s.

Traditional biplanar draining products, thickness and other operating conditions being equal, have a value of 0.0008 m²/s.

The resulting net has high-level mechanical characteristics and in particular its tensile strength per linear meter exceeds 8.5 kN/m in the extrusion direction, and it has a good flexural strength also thanks to the "core-cladding" effect obtained due to the fact that the intermediate filament oriented in the main direction, which constitutes the core, is rigidly connected to two orders of meshes on opposite faces which in practice form the cladding.

The overall thickness of the net can range from 4 to 12 mm, preferably from 5 to 9, achieving internal advantages in flexural strength, obviously with reference to loads which are adequately distributed and to pressures which are sufficiently uniform in final application.

The net preferably has a unit weight which can range from 450 to 2200 g/m²_{.}

From what has been described above, it is thus evident that the invention achieves the proposed aim and objects, and in particular the fact is stressed that a draining and filtering net, particularly for geotechnical applications, is provided in which it is possible to optimize both the draining value and the filtering values, since contact of the mutually opposite layers of nonwoven fabric is avoided absolutely.

The invention thus conceived is susceptible of numerous modifications and variations, all of which are within the scope of the inventive concept.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A draining and filtering net (1), particularly for geotechnical applications, comprising an intermediate layer (2) and a first outer layer (3) and a second outer layer (4;30) at the mutually opposite faces of said intermediate layer (2), said intermediate layer (2) and said first and second outer layers (3,4;30) being provided monolithically, said intermediate layer (2) being constituted by a plurality of substantially continuous filaments (10) which lie along the extrusion direction, **characterized in that** said intermediate layer (2) being thicker than each of said outer layers (3,4;30) and at least one layer of nonwoven fabric (20) being further provided which is connected to at least one (3,4) of said outer layers.

2. The draining and filtering net (1) according to claim 1, **characterized in that** said plurality of substantially continuous filaments (10) has a height, substantially at right angles to the plane of arrangement of said net, which ranges from 3 to 6 mm, and a width, in a direction which is substantially parallel to the plane of arrangement of said net, which ranges from 1 to 3 mm.

3. The draining and filtering net (1) according to the preceding claims, **characterized in that** the spacing between said substantially continuous filaments (10) ranges from 8 to 20 mm.

4. The draining and filtering net (1) according to one or more of the preceding claims, **characterized in that** said outer layers (3,4) are constituted by a square-mesh net with at least one filament (3a,4a) which is substantially parallel to said continuous filaments (10).

5. The draining and filtering net (1) according to claim 4, **characterized in that** the transverse filaments (3b,4b) of said outer layers (3,4) lie substantially at right angles to the direction of arrangement of said continuous filaments (10).

6. The draining and filtering net (1) according to one or more of the preceding claims, **characterized in that** it comprises a layer of nonwoven fabric (20) on both of said outer layers (3,4).

7. The draining and filtering net (1) according to one or more of the preceding claims, **characterized in that** said layer of nonwoven fabric (20) has a grammage of substantially 180 g/m².

8. The draining and filtering net (1) according to one or more of the preceding claims, **characterized in that** said intermediate layer (2) and said outer layers (3,4;30) are made of a single material.

9. The draining and filtering net (1) according to one or more of the preceding claims 1 to 7, **characterized in that** said intermediate layer (2) and said outer layers (3,4;30) are provided monolithically by means of mutually different materials.

10. The draining and filtering net (1) according to one or more of the preceding claims, **characterized in that** at least one (3) of said outer layers is constituted exclusively by transverse filaments (3b) which lie substantially at right angles to the arrangement of said continuous filaments (10).

11. The draining and filtering net (1) according to one or more of the preceding claims, **characterized in that** it has a thickness ranging from 4 to 12 mm, preferably from 5 to 9 mm.

12. The draining and filtering net (1) according to one or more of the preceding claims, **characterized in that** the hydraulic transmissivity is higher than 0.001 m²/s, with a hydraulic gradient of 0.1 and an applied pressure of 1200 kPa for 100 hours.

13. The draining and filtering net (1) according to one or more of the preceding claims, **characterized in that** it withstands a tensile breaking strain per linear meter of 8.5 kN/m in the extrusion direction.

14. The draining and filtering net (1) according to one or more of the preceding claims, **characterized in that** it has a weight ranging from 450 to 2200 g/m².

15. The draining and filtering net (1) according to one or more of the preceding claims, **characterized in that** said filaments (10) have a height between 3 and 6 mm and a width between 1 and 3 mm.

## Patentansprüche

1. Ablauf- und Filternetz (1), insbesondere für geotechnische Anwendungen, das eine Zwischenschicht (2) und eine erste Außenschicht (3) und eine zweite Außenschicht (4; 30) auf den einander entgegengesetzten Flächen der Zwischenschicht (2) enthält, wobei die Zwischenschicht (2) und die erste und zweite Außenschicht (3, 4; 30) monolithisch vorgesehen sind, wobei die Zwischenschicht (2) durch eine Vielzahl von im Wesentlichen endlosen Fäden (10) gebildet ist, welche entlang der Extrusionsrichtung liegen, **dadurch gekennzeichnet, dass** die Zwischenschicht (2) dicker als jede der Außenschichten (3, 4; 30) ist und ferner mindestens eine Schicht aus Faservlies (20) vorgesehen ist, welche mit mindestens einer (3, 4) der Außenschichten verbunden ist.

2. Ablauf- und Filternetz (1) nach Anspruch 1, **dadurch gekennzeichnet, dass** die Vielzahl der im Wesentlichen endlosen Fäden (10), im Wesentlichen im rechten Winkel zu der Ebene der Anordnung des Netzes, eine Höhe, welche im Bereich von 3 bis 6 mm liegt, und eine Breite in einer Richtung hat, die im Wesentlichen parallel zu der Ebene der Anordnung des Netzes ist, welche im Bereich von 1 bis 3 mm liegt.

3. Ablauf- und Filternetz (1) nach den vorhergehenden Ansprüchen, **dadurch gekennzeichnet, dass** der Zwischenraum zwischen den im Wesentlichen endlosen Fäden (10) im Bereich von 8 bis 20 mm liegt.

4. Ablauf- und Filternetz (1) nach einem oder mehreren der vorhergehenden Ansprüche, **dadurch gekennzeichnet, dass** die Außenschichten (3, 4) durch ein Quadratmaschennetz mit mindestens einem Faden (3a, 4a) gebildet sind, welcher im Wesentlichen parallel zu den endlosen Fäden (10) ist.

5. Ablauf- und Filternetz (1) nach Anspruch 4, **dadurch gekennzeichnet, dass** die Querfäden (3b, 4b) der Außenschichten (3, 4) im Wesentlichen im rechten Winkel zu der Richtung der Anordnung der endlosen Fäden (10) liegen.

6. Ablauf- und Filternetz (1) nach einem oder mehreren der vorhergehenden Ansprüche, **dadurch gekennzeichnet, dass** es auf beiden Außenschichten (3, 4) eine Schicht aus Faservlies (20) aufweist.

7. Ablauf- und Filternetz (1) nach einem oder mehreren der vorhergehenden Ansprüche, **dadurch gekennzeichnet, dass** die Schicht aus Faservlies (20) ein Flächengewicht von im Wesentlichen 180 g/m² hat.

8. Ablauf- und Filternetz (1) nach einem oder mehreren der vorhergehenden Ansprüche, **dadurch gekennzeichnet, dass** die Zwischenschicht (2) und die Außenschichten (3, 4; 30) aus einem einzigen Material gefertigt sind.

9. Ablauf- und Filternetz (1) nach einem oder mehreren der vorhergehenden Ansprüche 1 bis 7, **dadurch gekennzeichnet, dass** die Zwischenschicht (2) und die Außenschichten (3, 4; 30) mittels voneinander verschiedener Materialien monolithisch aufgebaut sind.

10. Ablauf- und Filternetz (1) nach einem oder mehreren der vorhergehenden Ansprüche, **dadurch gekennzeichnet, dass** mindestens eine (3) der Außenschichten ausschließlich durch Querfäden (3b) gebildet ist, welche im Wesentlichen im rechten Winkel zu der Anordnung der endlosen Fäden (10) liegen.

11. Ablauf- und Filternetz (1) nach einem oder mehreren der vorhergehenden Ansprüche, **dadurch gekennzeichnet, dass** es eine Dicke im Bereich von 4 bis 12 mm, vorzugsweise von 5 bis 9 mm hat.

12. Ablauf- und Filternetz (1) nach einem oder mehreren der vorhergehenden Ansprüche, **dadurch gekennzeichnet, dass** die hydraulische Durchlässigkeit höher als 0,001 m²/s, mit einem hydraulischen Gradienten von 0,1 und einem aufgebrachten Druck von 1200 kPa für 100 Stunden ist.

13. Ablauf- und Filternetz (1) nach einem oder mehreren der vorhergehenden Ansprüche, **dadurch gekennzeichnet, dass** es einer Zugreißfestigkeit pro laufendem Meter von 8,5 kN/m in Extrusionsrichtung standhält.

14. Ablauf- und Filternetz (1) nach einem oder mehreren der vorhergehenden Ansprüche, **dadurch gekennzeichnet, dass** es ein Gewicht im Bereich von 450 bis 2200 g/m² hat.

15. Ablauf- und Filternetz (1) nach einem oder mehreren der vorhergehenden Ansprüche, **dadurch gekennzeichnet, dass** die Fäden (10) eine Höhe zwischen 3 und 6 mm und eine Breite zwischen 1 und 3 mm haben.

## Revendications

1. Toile de drainage et de filtration (1), en particulier pour des applications géotechniques, comprenant une couche intermédiaire (2) et une première couche externe (3) et une seconde couche externe (4 ; 30) disposées sur les faces respectivement opposées de ladite couche intermédiaire (2), ladite couche intermédiaire (2) et lesdites première et seconde couches externes (3,4 ;30) étant prévues de façon monolithique, ladite couche intermédiaire (2) étant constituée par une pluralité de filaments essentiellement continus (10) qui sont couchés le long de la direction d'extrusion, **caractérisée en ce que** l'épaisseur de ladite couche intermédiaire (2) est supérieure à l'épaisseur de chacune desdites couches externes (3,4 ;30) et qu'au moins une couche en tissus non-tissé (20), qui est reliée à une (3,4) desdites couches externes au moins, est prévue en plus.

2. Toile de drainage et de filtration (1) suivant la revendication 1, **caractérisée en ce que** ladite pluralité de filaments essentiellement continus (10) présente une hauteur essentiellement de manière à former des angles droits avec le plan de disposition de ladite toile, qui est de 3 à 6 mm, et une largeur, dans une direction qui est essentiellement parallèle au plan de disposition de ladite toile, qui est de 1 à 3 mm.

3. Toile de drainage et de filtration (1) suivant les revendications précédentes, **caractérisée en ce que** l'espacement entre lesdits filaments essentiellement continus (10) est de 8 à 20 mm.

4. Toile de drainage et de filtration (1) suivant une ou plusieurs des revendications précédentes, **caractérisée en ce que** lesdites couches externes (3,4) sont constituées par un filet à mailles carrées avec au moins un filament 3a,4a) qui est essentiellement parallèle audits filaments continus (10).

5. Toile de drainage et de filtration (1) suivant la revendication 4, **caractérisée en ce que** les filaments transversaux (3b,4b) desdites couches externes (3,4) sont couchés de manière à former essentiellement des angles droits avec la direction de disposition desdits filaments continus (10).

6. Toile de drainage et de filtration (1) suivant une ou plusieurs des revendications précédentes, **caractérisée en ce qu'**elle comprend une couche en tissu non-tissé (20) sur chacune desdites couches externes (3,4).

7. Toile de drainage et de filtration (1) suivant une ou plusieurs des revendications précédentes, **caractérisée en ce que** ladite couche de tissu non-tissé (20) présente un grammage de 180 g/m² essentiellement.

8. Toile de drainage et de filtration (1) suivant une ou plusieurs des revendications précédentes, **caractérisée en ce que** ladite couche intermédiaire (2) et lesdites couches externes (3,4 ;30) sont réalisées dans un matériau unique.

9. Toile de drainage et de filtration (1) suivant une ou plusieurs des revendications précédentes 1 à 7, **caractérisée en ce que** ladite couche intermédiaire (2) et lesdites couches externes (3,4 ;30) sont prévues de façon monolithique au moyen de matériaux respectivement différents.

10. Toile de drainage et de filtration (1) suivant une ou plusieurs des revendications précédentes, **caractérisée en ce qu'**au moins une (3) desdites couches externes est constituée exclusivement de filaments transversaux (3b) qui sont couchés de manière à former essentiellement des angles droits avec la disposition desdits filaments continus (10),

11. Toile de drainage et de filtration (1) suivant une ou plusieurs des revendications précédentes, **caractérisée en ce qu'**elle présente une épaisseur de 4 à 12 mm, de préférence de 5 à 9 mm.

12. Toile de drainage et de filtration (1) suivant une ou plusieurs des revendications précédentes, **caractérisée en ce que** la transmissivité hydraulique est supérieure à 0,001 m²/s avec un gradient hydraulique de 0,1 et une pression appliquée de 1200 kPA pour 100 heures.

13. Toile de drainage et de filtration (1) suivant une ou plusieurs des revendications précédentes, **caractérisée en ce qu'**elle résiste à la rupture par traction par mètre linéaire de 8,5 kN/m dans la direction d'extrusion.

14. Toile de drainage et de filtration (1) suivant une ou plusieurs des revendications précédentes, **caractérisée en ce qu'**elle présente un poids de 450 à 220 g/m².

15. Toile de drainage et de filtration (1) suivant une ou plusieurs des revendications précédentes, **caractérisée en ce que** lesdits filaments (10) présentent une hauteur comprise entre 3 et 6 mm et une largeur comprise entre 1 et 3 mm.
